# EUROPÄISCHE PATENTSCHRIFT

(11) **EP 0 563 008 B1**
(45) Veröffentlichungstag und Bekanntmachung des Hinweises auf die Patenterteilung: **27.11.1996**
(21) Anmeldenummer: 93810179.7
(22) Anmeldetag: 11.03.1993
(51) Int. Cl.: A61C 13/30

(54) **Zahnwurzelkanal-Anker und Eindrehwerkzeug**
Tooth root canal anchor and driving tool
Ancre pour canal de racine dentaire et outil à introduire par mouvement tournant

(30) Priorität: 26.03.1992 CH 971/92
(43) Veröffentlichungstag der Anmeldung: 29.09.1993
(73) Patentinhaber: CENDRES ET METAUX S.A., CH-2501 Bienne (CH)
(72) Erfinder: Beuchat, Jean-Pierre, CH-2560 Nidau (CH); Szegvary, Georg, CH-8053 Zürich (CH)
(74) Vertreter: AMMANN PATENTANWAELTE AG BERN

(56) Entgegenhaltungen:
- EP-A- 0 043 343
- CH-A- 662 939
- CH-A- 674 138
- US-A- 4 802 848

## Beschreibung

Die vorliegende Erfindung betrifft einen Zahnwurzelkanal-Anker und ein zugehöriges, d.h. mit dem Zahnwurzelkanal-Anker zusammenwirkendes, zu dessen Eindrehen in den Wurzelkanal eines Zahnes erforderliches Werkzeug, wobei der Zahnwurzelkanal-Anker aus einem Verankerungsteil zum Verankern im Wurzelkanal und aus einem Kopf für den Aufbau eines Zahnstumpfs oder dgl. besteht und der Kopf mit radialen Vorsprüngen und mit Längsnuten versehen ist; das Eindrehwerkzeug weist Mittel zur zeitweiligen Verbindung mit dem Zahnwurzelkanal-Anker auf.

Zahnwurzelkanal-Anker dieser Art sind in der EP-B-0 043 343 beschrieben. Aus der CH-B-562 605 sind ein Anker zur Verbindung künstlicher Zahnaufbauten mit der Wurzel natürlicher Zähne und ein zugehöriges Eindrehwerkzeug bekannt. Weiterhin zeigt die US-A-1 479 508 einen Zahnwurzelkanal-Anker, dessen Kopf radiale Vorsprünge aufweisen kann.

Zahnwurzelkanal-Anker sind seit langem bekannt; sie dienen dazu, die Verbindung zwischen einer oder mehreren Wurzeln eines Zahnes, dessen Krone mehr oder weniger entfernt werden musste, und dem Aufbau eines Zahnstumpfes oder dgl. herzustellen. Die mit dieser Arbeit verbundenen Schwierigkeiten sind dem Fachmann, in diesem Falle dem Zahnarzt, bestens bekannt. Der Zahnwurzelkanal-Anker besteht in aller Regel aus zwei Bereichen, nämlich einem unteren (endodontischen), in den Wurzelkanal einzusetzenden Verankerungsteil und einem oberen (exodontischen) Kopf, der aus der Wurzel ins Freie ragt und Mittel zur Verbindung mit den Materialien des Zahnstumpfs oder dgl. aufweist.

Diese Mittel sind gemäss CH-B-562 605 und auch EP-B-0 043 343 kreisscheibenförmige Retentionsflügel, die in zwei oder mehreren Reihen angeordnet sind. Es hat sich nun gezeigt, dass in vielen Fällen diese Flügel zu breit sind, insbesondere wenn es sich um den Aufbau kleiner Zähne handelt, z.B. von Eck- und Schneidezähnen oder von Zähnen, die zwei oder mehrere Wurzelkanäle besitzen. Weiterhin besteht bei den bekannten Zahnwurzelkanal-Ankern und deren Eindrehwerkzeug der in der Praxis sehr schwerwiegende Nachteil, dass sich der Zahnwurzelkanal-Anker beim Einsetzen aus dem Eindrehwerkzeug löst. Die bisher bekannten Eindrehwerkzeuge bilden mit dem einzusetzenden Zahnwurzelkanal-Anker keine sichere zeitweilige Verbindung, denn eine solche bekannte Verbindung ist lediglich drehschlüssig ausgebildet.

Hier soll nun die Erfindung abhelfen und ein System aus Zahnwurzelkanal-Anker und Eindrehwerkzeug schaffen, das die festgestellten Nachteile nicht mehr aufweist.

Die Lösung dieser Aufgabe ist der im unabhängigen Patentanspruch 1 definierte Zahnwurzelkanal-Anker mit Eindrehwerkzeug, dessen besondere Ausführungsformen in den abhängigen Ansprüchen niedergelegt sind.

Die Erfindung stellt zum ersten Male eine sichere und starre, aber trotzdem nur zeitweilige Verbindung von Zahnwurzelkanal-Anker und Eindrehwerkzeug her. Dies wird durch die besondere Formgebung der Längsnuten des Kopfes bewirkt, nämlich dadurch, dass die Nuten zum Verankerungsteil hin bogenförmig radial nach aussen auslaufen. Die Lamellen des Eindrehwerkzeugs werden beim Einschieben in die Nuten des Kopfes schliesslich durch den bogenförmigen Auslauf der Nuten festgeklemmt; da die Lamellen des Eindrehwerkzeugs den gleichen Querschnitt wie die Form der Nuten und eine gleiche oder grössere Länge wie die Nuten des Kopfes des Zahnwurzelkanal-Ankers haben, bleibt die starre Verbindung zwischen Eindrehwerkzeug und Zahnwurzelkanal-Anker über die ganze Länge der Nuten erhalten. Dadurch bildet sich neben der drehschlüssigen Verbindung noch eine form- und kraftschlüssige Verbindung aus, die das unbeabsichtigte Lösen des Zahnwurzelkanal-Ankers vom Eindrehwerkzeug verunmöglicht.

Die Erfindung erweitert darüber hinaus den durch eine relativ breite Form der Retentionsflügel etwas eingegrenzten Anwendungsbereich der bekannten Zahnwurzelkanal-Anker. Durch eine gedrungenere Form der Retentionsflügel wird der Zahnwurzelkanal-Anker universeller einsetzbar, und man erzielt, was überraschend war, trotzdem eine optimale Retention für das Zahnstumpf-Aufbaumaterial. Schliesslich besitzt der erfindungsgemässe Zahnwurzelkanal-Anker noch einen ringförmigen Auflageteller, der zur flächigen Auflage auf eine an der Oberfläche der Wurzel präparierte Auflageschulter bestimmt ist. Diese Abstützung des Zahnwurzelkanal-Ankers auf dem Restzahn trägt zur gleichmässigen Verteilung von Kräften auf die Wurzel und den Aufbau bei.

Es ist weiterhin bevorzugt, dass der Kopf des erfindungsgemässen Zahnwurzelkanal-Ankers vier Längsnuten und damit zusammenhängend das Eindrehwerkzeug auch vier Lamellen aufweist, obwohl Ausführungen mit drei, fünf oder sechs Nuten und Lamellen ebenfalls denkbar sind. Ganz bevorzugt ist eine Ausführungsform, bei der zwei oder mehrere Zahnwurzelkanal-Anker mit unterschiedlichen Aussendurchmessern von Kopf und Verankerungsteil vorliegen, bei denen aber die Spitzen der V-förmigen Nuten bzw. auch anders geformter Nuten alle auf dem für alle Anker gleichen Durchmesser liegen, d. h. dass die Tiefe der Nuten, von der Längsachse des Ankers aus gemessen, stets die gleiche ist. Dies bedeutet, dass für Zahnwurzelkanal-Anker unterschiedlicher Grössen nur ein und dasselbe Eindrehwerkzeug erforderlich ist.

Im folgenden werden an Hand der Zeichnung Ausführungsformen der Erfindung näher beschrieben. Die Beschreibung dieser Ausführungsformen schränkt die Erfindung aber nicht ein.

Es zeigen:
- Fig. 1: eine stark vergrösserte perspektivische Ansicht des Kopfes eines erfindungsgemässen Zahnwurzelkanal-Ankers,
- Fig. 2: eine Seitenansicht einer Variante des erfindungsgemässen Zahnwurzelkanal-Ankers,
- Fig. 3: eine Draufsicht des Zahnwurzelkanal-Ankers gemäss Fig. 1 oder 2,
- Fig. 4: eine teilgeschnittene Seitenansicht eines erfindungsgemässen Eindrehwerkzeugs,
- Fig. 5: eine Ansicht des Eindrehwerkzeugs gemäss Fig. 4 von unten,
- Fig. 6: das Ende des Vorgangs des Einsetzens des erfindungsgemässen Zahnwurzelkanal-Ankers in einen Wurzelkanal eines Zahnstumpfes,
- Fig. 7: im Schnitt einen fertig aufgebauten künstlichen Schneidezahn, und
- Fig. 8: im Schnitt einen fertig aufgebauten künstlichen Backenzahn.

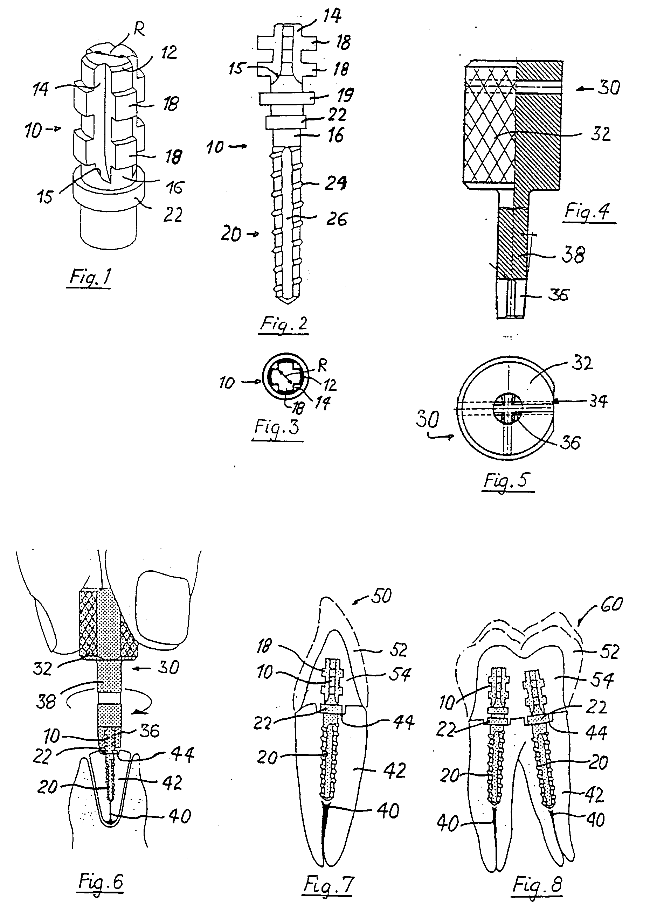

In der perspektivischen Ansicht gemäss Fig. 1, die den Zahnwurzelkanal-Anker in etwa 20facher Vergrösserung zeigt, ist der Verankerungsteil des Zahnwurzelkanal-Ankers nicht dargestellt; er kann beliebig geformt sein, entspricht bevorzugt aber demjenigen des Zahnwurzelkanal-Ankers gemäss EP-B-0 043 343. Dieser Verankerungsteil soll im vorliegenden Dokument daher nicht näher beschrieben werden.

Der Kopf 10 des Zahnwurzelkanal-Ankers hat eine im allgemeinen zylindrische Form. Sein oberes Ende ist mit Abschrägungen 12 zum leichteren Einführen des Eindrehwerkzeugs versehen. Auf dem Umfang des zylindrischen Körpers 10 befinden sich vier parallele Längsnuten 14 mit V-Profil, das in den Fig. 1 und 3 zu sehen ist. Am unteren Bereich des Kopfes 10 laufen die Nuten 14 in einem Bogen 15 radial nach aussen aus; in den Figuren ist nur ein Bogen vorgesehen, aber es können auch beide Nutenflächen bogenförmig nach aussen auslaufen. Auf dem zylindrischen Schaft 16 des Kopfes 10, in den die Nuten 14 eingearbeitet sind, befinden sich Vorsprünge 18, die von den Nuten 14 unterbrochene Teile von Ringzylindern darstellen. Der ringförmige Vorsprung 19 in Fig. 2 ist nicht von Nuten 14 unterbrochen. Aus Fig. 2 geht hervor, dass die Vorsprünge 18, 19 breitere Retentionsflügel 18, 19 bilden. Die Vorsprünge 18 in Fig. 1 entsprechen funktionsmässig den Retentionsflügeln der Fig. 2. Dabei sind normalerweise mindestens zwei Reihen von Vorsprüngen 18 oder Retentionsflügeln vorhanden; die Längsnuten 14 erstrecken sich im allgemeinen bis unter die unterste Reihe 19 der Vorsprünge, auf jeden Fall aber enden sie oberhalb des unten beschriebenen Auflagetellers. Sie können also auch oberhalb einer Reihe von Vorsprüngen enden. Die Vorsprünge bzw. Flügel 18, 19 bilden, wie schon erwähnt, zusammen mit den Nuten 14 das Gerüst zur Retention des Aufbaumaterials des Zahnstumpfs oder dgl.

Zwischen dem Schaft 16 des Kopfes und dem Verankerungsteil 20 ist ein im wesentlichen ringzylinderförmiger Auflageteller 22 vorgesehen, dessen Funktion bereits erwähnt wurde und der näher aus den Fig. 6 bis 8 hervorgeht. Der Verankerungsteil 20 weist in an sich bekannter Weise schraubenlinienförmige, vorstehende Verankerungsrippen 24 sowie Zemententlastungsrillen 26 auf und verjüngt sich mit einem kleinen Winkel nach unten. Es ist auch möglich, dass der Auflageteller 22 einen polygonalen Umriss hat.

In Fig. 4 und 5 ist das zugehörige Eindrehwerkzeug 30 in etwa dem gleichen Massstab wie in Fig. 2 und 3 dargestellt. Es besitzt einen auf der Oberfläche gekordelten Kopf 32, der mit einer Abflachung 34 versehen ist, welche es gestattet, die Lage eines angesetzten Zahnwurzelkanal-Ankers und die Anzahl der Umdrehungen des Werkzeugs zu bestimmen. Der an den Kopf 32 anschliessende Schaft 38 läuft in vier Lamellen 36 aus, deren Querschnitt exakt demjenigen der Nuten 14 des Zahnwurzelkanal-Ankers entspricht. Natürlich gilt dies nicht für die Aussenflächen, die nicht in Berührung mit den Nuten 14 kommen können. Die Lamellen 36 können leicht abgeschrägt und zur Mittelachse leicht vorgespannt sein, doch ist dies nicht erforderlich. Die Vorderflächen der Lamellen sind zum leichteren Einführen des Kopfes des Zahnwurzelkanal-Ankers abgeschrägt. Die Lamellen 36 sind so lang, dass sie sich frei mit dem bogenförmigen Auslauf 15 der Längsnuten 14 verklemmen können, wenn das Werkzeug über den Anker geschoben wird.

Fig. 6 zeigt nun die Endphase des Einsetzens des Zahnwurzelkanal-Ankers in einen Wurzelkanal 40 eines Restzahns 42. Dabei sind das Eindrehwerkzeug und der Zahnwurzelkanal-Anker teilweise im Längsschnitt gezeigt. Man erkennt die innige Verbindung von Zahnwurzelkanal-Anker und Eindrehwerkzeug, die entstanden ist, indem die beiden Elemente unter Kraftanwendung axial zusammengeschoben werden; diese Verbindung kann durch Ziehen in Axialrichtung jederzeit getrennt werden. Wie aus Fig. 6 hervorgeht, ist der Restzahn 42 an der Oberfläche mit einer planen Einsenkung 44 rechtwinklig zur Achse des Wurzelkanals 40 versehen worden; dies geschieht in bekannter Weise mit einer Senkfräse. Der eingedrehte Zahnwurzelkanal-Anker hat sich mit seinem Auflageteller 22 auf die Planfläche der Einsenkung gesetzt, und dadurch hat sich eine seitenfeste Auflage ergeben.

In Fig. 7 erkennt man den Aufbau eines künstlichen Schneidezahns 50, mit einem Restzahn 42 mit Wurzelkanal 40, einem Zahnwurzelkanal-Anker mit Verankerungsteil 20, Kopf 10, Teller 22 und Vorsprüngen 18, der einen Aufbau 54 mit Krone 52 trägt. In Fig. 8 ist das Gleiche am Beispiel eines Backenzahns 60 gezeigt, bei dem zwei Wurzelkanäle 40 entsprechend bearbeitet wurden und der zwei Zahnwurzelkanal-Anker enthält.

In der vorstehenden Beschreibung sind die Längsnuten als V-förmige Nuten beschrieben und dargestellt worden, wobei die Schenkel des V etwa rechtwinklig zueinander stehen. Es ist jedoch ohne weiteres möglich, den Nuten (und selbstverständlich gleichzeitig den Lamellen des Eindrehwerkzeugs) andere Formen zu geben, beipielsweise V-Form mit einem anderen Einschlusswinkel als 90°, ovale Formen und rechteckige, z.B. quadratische Form usw. Wichtig ist nur, dass jede dieser Nuten bogenförmig nach aussen ausläuft.

In der vorstehenden Beschreibung und der Zeichnung ist der Kopf des Wurzelkanalankers mit einem kreisförmigen Querschnitt dargestellt worden. Zuweilen ergeben sich weitere Vorteile, beispielsweise beim Ansetzen des Eindrehwerkzeugs, wenn der Querschnitt des Kopfes 10 andere Formen annimmt. Er kann z.B. quadratisch oder sechseckig sein und V-Nuten oder anders geformte Nuten aufweisen. In jedem Falle ist das Eindrehwerkzeug diesen Formen anzupassen.

Der erfindungsgemässe Zahnwurzelkanal-Anker wird normalerweise in mehreren Grössen gebraucht und hergestellt, beispielsweise mit einem (grössten, über die Vorsprünge 18 gemessenen) Aussendurchmesser von 1 bis 4 mm. Bei allen Grössen sind der Radius R (Fig. 1 und 3) des Kreises, auf dem die Spitzen des V der V-förmigen Nuten liegen, und auch die Länge und die Querschnittsform der Nuten gleich. (Dies bedeutet, dass bei grösseren Zahnwurzelkanal-Ankern die Nuten 14 tiefer sind.) Dadurch ist nur ein Eindrehwerkzeug für alle Grössen der Zahnwurzelkanal-Anker erforderlich.

Die Vorbereitung der Zähne zur Aufnahme des erfindungsgemässen Zahnwurzelkanal-Ankers und die Art und Weise der Befestigung des Zahnwurzelkanal-Ankers im Wurzelkanal mit Zement u. dgl. und auch der Aufbau der Krone sind nicht gezeigt und besprochen worden, da diese Tätigkeiten dem Fachmann absolut geläufig sind. Der erfindungsgemässe Zahnwurzelkanal-Anker benötigt ausser dem Fräsen einer Planfläche keine zusätzlichen oder besonderen Tätigkeiten des Arztes oder Technikers.

## Patentansprüche

1. Zahnwurzelkanal-Anker mit Eindrehwerkzeug, wobei der Zahnwurzelkanal-Anker aus einem Verankerungsteil (20) und einem Kopf (10) für den Aufbau eines Zahnstumpfs oder dgl. (50, 60) besteht und mit radialen Retentionsflügeln (18, 19) und Längsnuten (14) versehen ist und das Eindrehwerkzeug Mittel (36) zur zeitweiligen Verbindung mit dem Kopf des Zahnwurzelkanal-Ankers aufweist, dadurch gekennzeichnet, dass zwischen Kopf (10) und Verankerungsteil (20) ein Auflageteller (22) vorgesehen ist, dass die Längsnuten (14) oberhalb des Auflagetellers (22) bogenförmig radial nach aussen auslaufen (15), und dass die Verbindungsmittel am Eindrehwerkzeug axial verlaufende, parallele Lamellen (36) sind, deren Querschnitt und gegenseitige Anordnung mit der Form und Anordnung der Nuten (14) des Ankers übereinstimmen und die so lang sind, dass sich ihre Vorderbereiche mit dem bogenförmigen Auslauf (15) der Nuten (14) verklemmen können.

2. Anker und Werkzeug nach Anspruch 1, dadurch gekennzeichnet, dass am Kopf des Ankers vier Längsnuten (14) vorhanden sind, die über den Umfang gleichmässsig verteilt sind, und dass das Eindrehwerkzeug entsprechend vier Verbindungslamellen (36) aufweist.

3. Anker und Werkzeug nach Anspruch 1 oder 2, dadurch gekennzeichnet, dass die Vorsprünge (18, 19) Teile von Ringzylindern bzw. Ringzylinder sind.

4. Anker und Werkzeug nach einem oder mehreren der vorstehenden Ansprüche, dadurch gekennzeichnet, dass der Anker in mehreren Grössen vorliegt, und dass bei allen Grössen die Form und Länge der Längsnuten (14) und ihre Tiefe, von der Längsachse des Ankers aus gemessen, gleich sind.

5. Anker und Werkzeug nach einem oder mehreren der vorstehenden Ansprüche, dadurch gekennzeichnet, dass die Längsnuten (14) des Kopfes (10) in nur einem Bogen (15) nach aussen auslaufen.

6. Anker und Werkzeug nach einem oder mehreren der vorstehenden Ansprüche, dadurch gekennzeichnet, dass der Kopf (10) des Ankers einen kreisrunden Querschnitt besitzt.

7. Anker und Werkzeug nach einem oder mehreren der vorstehenden Ansprüche, dadurch gekennzeichnet, dass die Längsnuten (14) des Kopfes (10) einen V-förmigen Querschnitt haben.

8. Anker und Werkzeug nach Anspruch 7, dadurch gekennzeichnet, dass die Seitenwandungen der Längsnuten (14) einen rechten Winkel einschliessen.

## Claims

1. Tooth root canal anchor and driving tool, said tooth root canal anchor comprising an anchoring part (20) and a head (10) for the mounting of a tooth stump or similar (50, 60) and being equipped with radial retention wings (18, 19) and longitudinal grooves (14), and said driving tool comprises means (36) for a temporary connection with the head of the tooth root canal anchor, characterised by the fact that a bearing collar (22) is provided between the head (10) and the anchoring part (20), that the longitudinal grooves (14) are ending outward above the bearing collar (22) in an arc (15), and that the connecting means on the driving tool are axially extending, parallel lamellas (36) whose section and whose mutual disposition correspond to the shape and the disposition of the anchor grooves (14), and which have such a length that their frontal regions are able to get jammed with the arcuate ending (15) of the grooves (14).

2. Tooth root canal anchor and driving tool according to claim 1, characterised by the fact that the head of the anchor comprises four longitudinal grooves (14) that are regularly distributed on the periphery, and that the driving tool correspondingly comprises four connection lamellas (36).

3. Tooth root canal anchor and driving tool according to claim 1 or 2, characterised by the fact that the projections (18, 19) are parts of ring cylinders or ring cylinders, respectively.

4. Tooth root canal anchor and driving tool according to one or more of the preceding claims, characterised by the fact that the anchor is present in different sizes, and that the shape and the length of the longitudinal grooves (14) and their depth, taken from the longitudinal axis of the anchor, is the same for all anchor sizes.

5. Tooth root canal anchor and driving tool according to one or more of the preceding claims, characterised by the fact that the longitudinal grooves (14) of the head (10) are ending towards the exterior by only one arc (15).

6. Tooth root canal anchor and driving tool according to one or more of the preceding claims, characterised by the fact that the head (10) has a circular cross section.

7. Tooth root canal anchor and driving tool according to one or more of the preceding claims, characterised by the fact that the longitudinal grooves (14) of the head (10) have a V-shaped cross section.

8. Tooth root canal anchor and driving tool according to claim 7, characterised by the fact that the lateral walls of the longitudinal grooves (14) enclose a right angle.

## Revendications

1. Ancre pour canal radiculaire dentaire et outil de pose par vissage, le dit ancre pour canal radiculaire dentaire consistant en une partie d'ancrage (20) et en une tête (10) pour le montage d'un chicot ou analogue (50, 60) et étant pourvu d'ailes de rétention radiales (18, 19) et de rainures longitudinales (14), et le dit outil de vissage comprenant des moyens (36) pour une connexion temporaire avec la tête de l'ancre pour canal radiculaire dentaire, caractérisés en ce qu'une assiette d'appui (22) est prévue entre la tête (10) et la partie d'ancrage (20), que les rainures longitudinales (14) vont radialement vers l'extérieur selon un arc (15) au-dessus de l'assiette d'appui (22), et que les moyens de connexion sur l'outil de vissage sont des lamelles axiales et parallèles (36) dont la section et la disposition mutuelle concordent avec la forme et la disposition des rainures (14) de l'ancre, et qui ont une telle longueur que leurs parties avant peuvent se coincer avec la partie finale arquée (15) des rainures (14).

2. Ancre et outil selon la revendication 1, caractérisés en ce que la tête de l'ancre comporte quatre rainures longitudinales (14) uniformément disposées sur son pourtour, et que l'outil de vissage comporte quatre lamelles de connexion correspondantes (36).

3. Ancre et outil selon la revendication 1 ou 2, caractérisés en ce que les ailes (18, 19) font partie de cylindres circulaires ou sont de tels cylindres.

4. Ancre et outil selon une ou plusieurs revendications précédentes, caractérisés en ce que l'ancre se présente en différentes grandeurs, et que la forme et la longueur des rainures longitudinales (14) ainsi que leur profondeur, mesurée depuis l'axe longitudinal de l'ancre, sont égales pour toutes les grandeurs.

5. Ancre et outil selon une ou plusieurs revendications précédentes, caractérisés en ce que les rainures longitudinales (14) de la tête (10) prennent fin vers l'extérieur selon un seul arc (15).

6. Ancre et outil selon une ou plusieurs revendications précédentes, caractérisés en ce que la tête (10) de l'ancre présente une section circulaire.

7. Ancre et outil selon une ou plusieurs revendications précédentes, caractérisés en ce que les rainures longitudinales (14) de la tête (10) ont une section en V.

8. Ancre et outil selon la revendication 7, caractérisés en ce que les parois latérales des rainures longitudinales (14) renferment un angle droit.
